# EUROPEAN PATENT APPLICATION

(11) **EP 2 383 325 A2**
(43) Date of publication of application: **02.11.2011**
(21) Application number: 11382116.9
(22) Date of filing: 18.04.2011
(51) Int. Cl.: C09K 21/14

(54) **Fire-retardant gel for industrial applications**

(30) Priority: 30.04.2010 ES 201030642
(71) Applicant: Puertas Padilla, S.L., 30330 El Abujon-Cartagena Murcia (ES)
(72) Inventor: Lozano Blanco, Luis, Javier, 30330, EL ABUJON-CARTAGENA (Murcia) (ES); Godínez Seoane, Carlos, 30330, EL ABUJON-CARTAGENA (Murcia) (ES); Hernández Fernández, Francisco, Javier, 30330, EL ABUJON-CARTAGENA (Murcia) (ES); Pérez de los Ríos, Antonia, 30330, EL ABUJON-CARTAGENA (Murcia) (ES); Sánchez Segado, Sergio, 30330, EL ABUJON-CARTAGENA (Murcia) (ES)
(74) Representative: Carpintero Lopez, Francisco

(57) **Abstract**

The invention relates to fire-retardant gel for industrial applications. The fire-retardant gel object of the invention is based on a formulation of acrylamide, N,N'-methylene-bis-acrylamide, aluminum potassium disulfate dodecahydrate, sodium chloride, magnesium chloride, ammonium persulfate and sodium metabisulfite. The gel obtained is free of boric acid and amine salts, contains up to 70% water and the addition of the polymerization initiators can be adjusted so that it can form the interior of the panels from any type of construction material while the mixture remains fluid and the polymerization process has not considerably advanced.

## Description

The present invention relates to the formulation of a polyacrylamide gel having fire-resistant properties for its use as filler in different construction materials and elements which are subject to compliance with specific regulations to that effect.

### Field of the Art

The invention is comprised in the technical sector of manufacturing technical plastics.

### State of the Art

The use of hydrated gels as filler material in panels for fire-resistant construction is a well-known practice for construction elements which must comply with determined fire-resistance requirements. Examples of these applications are described in patent documents US5543230 and CN101279822. The three-dimensional structure of the gel can be based on alkali metal silicates or organic polymers, having different flow properties and production conditions thereof (gelling times and temperatures). The requirement levels in terms of fire-resistance were considerably raised as a consequence of the new regulation to that effect, as is the case of standard UNE-EN 1449:2006. In that sense, the limitations in their application were due to the presence of alkali metals that favor the gel melting at high temperatures along with water loss due to the evaporation of the gel, which involves the breakdown of the polymer network.

Polyacrylamide gels were introduced by Raymond and Weintraub in 1959. These gels are formed by means of the polymerization of acrylamide in a solution having a determined pH containing the monomer, polymerization initiators and additives conferring a specific character to each gel, such as boric acid, alcohol amines or alkaline phosphates. The polymerization of the acrylamide alone does not generate a gel, but rather a type of rubber which is a very viscous solution of long linear chains of polyacrylamide. In order for a gel *per se* to be formed, it is necessary to create covalent bonds between those chains; to that end a molecule capable of forming cross-bridges is added to the medium. The most widely used is N,N'-methylene-bis-acrylamide (BIS) due to its capacity of being simultaneously integrated in two growing chains.

### Summary of the Invention

The fire-retardant gel object of the invention is based on a formulation of acrylamide, N,N'-methylene-bis-acrylamide, aluminum potassium disulfate dodecahydrate, sodium chloride, magnesium chloride, ammonium persulfate and sodium metabisulfite. The gel obtained is free of boric acid and amine salts, contains up to 70% water and the addition of the polymerization initiators can be adjusted so that it can form the interior of the panels from any type of construction material while the mixture remains fluid and the polymerization process has not considerably advanced.

### Detailed Description of the Invention

The gel is manufactured at room temperature (15-25 °C). In a first step potassium alum is dissolved in hot water (95°C), subsequently adding acrylamide and sodium and potassium chlorides in the following reference proportions:

| | |
|---|---|
| Potassium alum (AlK(SO₄)₂ · 12 H₂O): | 0.1-0.3 mol/mol acrylamide. |
| Sodium chloride (NaCl): | 0.9-1.1 mol/mol acrylamide. |
| Magnesium chloride (Mg₂Cl · 6 H₂O): | 0.8-1 mol/mol acrylamide. |
| Water (H₂O): | 18-20 mol/mol acrylamide. |

The pale yellow liquid formed must be stirred and then passed through a filter cloth to remove impurities. The filtered liquid must be left to slightly cool but not under 50°C because N,N'-methylene-bis-acrylamide dissolved in hot conditions must subsequently be added and it could crystallize and not form part of the final solution due to its low solubility in water. The filtering process could be eliminated in the event that the purities of the reagents were high enough.

In a second step the monomer N,N'-methylene-bis-acrylamide is prepared by dissolving it in hot water (50°C). Solubility of the monomer at 18°C is very low (1 g/L), dissolving 20 g/L at 50°C. The solution is added such that the monomer/acrylamide ratio is maintained in the molar range of 0.005-0.006, vigorously stirring to prevent it from crystallizing. This mixture can be stored for months without being subjected to the light.

The initiator used for polymerization is ammonium persulfate. It is prepared by dissolving 8 g of (NH₄)₂S₂O₈ PRS in 100 mL of H₂O at room temperature. As a pH-regulating agent, it is necessary to prepare a solution of sodium pyrosulfite by dissolving 2 g of Na₂(S₂O₅) PRS in 100 mL of H₂O at room temperature. The dosage of both solutions conditions the rate of polymerization of the gel and will depend on the room temperature at which the process is being carried out. An optimal dosage for both solutions ranging between 0.5 and 1.5 mL/L of acrylamide solution has theoretically been established. The addition of both reagents starts the irreversible gelling process, which can be monitored by measuring the temperature of the gel.

The later type of application of the gel conditions the exact choice of initiator ratios with respect to the acrylamide content of the gel. The process of filling these fire-resistant panels (1) must start with the gel right after having added the polymerization initiators, such that the gel solidifies inside said panel. Likewise, it must be done by maintaining a laminar flow at the inlet, thus preventing the formation of bubbles inside since dissolved oxygen strongly inhibits polymerization. The polymerization reaction is exothermic and it must be taken into account that it occurs with volume shrinkage.
(1) Whatever material is used in said panels (metal, wood, PVC, etc.), even glasses formed by glass-finished panels.

### Embodiments of the Invention

The present invention is additionally illustrated by means of the following example, which does not seek to limit the scope thereof.

### Example 1. Manufacture of 100 g of gel

### Dosage:

| | |
|---|---|
| Acrylamide: | 0.0076 g |
| AIK(SO₄)₂: | 0.0019 g |
| NaCI: | 7.73 g |
| Mg₂CI: | 10.60 g |
| H₂O: | 66.18 g |
| bis-acrylamide: | 0.11 g |
| (NH₄)₂S₂O₈: | 9.02 g |
| Na₂(S₂O₅): | 6.34 g |

## Claims

1. Acrylamide-based fire-retardant gel having fire-resistant properties comprising the following ingredients:
| | |
|---|---|
| Acrylamide: | <0.01 % |
| AIK(SO₄)₂: | <0.01 % |
| NaCl: | 6-9% |
| Mg₂Cl: | 9-13% |
| H₂O: | >60% |
| bis-acrylamide: | 0.8-0.12% |
| (NH₄)₂S₂O₈: | 8-10% |
| Na₂(S₂O₅): | 3-10% |

2. Acrylamide-based fire-retardant gel comprising aluminum potassium disulfate dodecahydrate in its formulation to confer refractory properties to such gel.

3. Acrylamide-based fire-retardant gel comprising ammonium persulfate in its formulation as a polymerization initiator.
